(19) Europäisches Patentamt
European Patent Office
Office européen des brevets

(11) **EP 4 163 309 A1**

(12) **EUROPEAN PATENT APPLICATION**

(43) Date of publication:
**12.04.2023 Bulletin 2023/15**

(21) Application number: **21201526.7**

(22) Date of filing: **07.10.2021**

(51) International Patent Classification (IPC):
*C08F 210/16* [(2006.01)]     *C08L 23/08* [(2006.01)]

(52) Cooperative Patent Classification (CPC):
(C-Sets available)
**C08F 210/16;** C08F 2420/07; C08L 23/0815

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• **WANG, Jingbo**
**4021 Linz (AT)**

• **BERGER, Friedrich**
**4021 Linz (AT)**
• **ALABRUNE, Arnaud**
**92400 Courbevoie (FR)**
• **POTTER, Elisabeth**
**4021 Linz (AT)**
• **AHO, Jani**
**06101 Porvoo (FI)**

(74) Representative: **Dehns**
**St. Bride's House**
**10 Salisbury Square**
**London EC4Y 8JD (GB)**

(54) **HDPE**

(57)    The invention provides a single-site catalysed multimodal high density polyethylene (HDPE) having a density in the range of 952 to 970 kg/m$^3$ measured according to ISO 1183 and an MFR2 of 0.1 to 4.0 g/10 min according to ISO 1133, and wherein the multimodal HDPE comprises at least two fractions:

(A) 30 to 70 wt%, relative to the total weight of the multimodal HDPE, of a lower molecular weight fraction being an ethylene homopolymer or copolymer with a density in the range of 955 to 970 kg/m$^3$ measured according to ISO 1183 and an MFR2 of 10 to 400 g/10 min measured according to ISO 1133; and

(B) 30 to 70 wt%, relative to the total weight of the multimodal HDPE, of a higher molecular weight fraction being an ethylene homopolymer or copolymer with a density in the range of 940 to 960 kg/m$^3$ measured according to ISO 1183 and an MFR2 of 0.01 to 1.0 g/10 min measured according to ISO 1133.

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
C08F 210/16, C08F 210/08, C08F 210/14,
C08F 2500/07, C08F 2500/12, C08F 2500/30;
C08F 210/16, C08F 210/08, C08F 210/14,
C08F 2500/07, C08F 2500/12, C08F 2500/30,
C08F 2500/02;
C08F 210/16, C08F 210/08, C08F 2500/07,
C08F 2500/12;
C08F 210/16, C08F 210/14, C08F 2500/07,
C08F 2500/12;
C08L 23/0815, C08L 23/0815, C08L 23/0815

**Description**

The present invention relates to a single-site catalysed multimodal high density polyethylene (HDPE) which is suitable for use in the manufacture of moulded articles. The invention further relates to a composition comprising the HDPE and a hydrocarbon resin. The present invention also relates to a process for the production of the HDPE, an article comprising said HDPE or said composition and to the use of said HDPE or said composition for the manufacture of an article.

**Background**

High density polyethylene (HDPE) is widely used in moulding applications due to its excellent combination of processability and mechanical properties. It is known that the performance of polyethylene is related to the density. The higher the density, the better the mechanical properties.

The present invention relates to a multimodal high density polyethylene (HDPE) resin suitable for preparing injection-moulded articles, especially caps and closures. In particular, the caps and closures of the invention can be used for closing bottles, such as bottles for carbonated and still drinks.

Caps and closures are generally prepared with HDPE resins as they offer attractive mechanical properties, such as stiffness. As mentioned above, these mechanical properties tend to improve for higher density polymers. Polyethylene prepared using a metallocene catalyst is specifically interesting for industrial scale applications due to its excellent mechanical properties and purity. However, due to the limitation of the metallocene technology, it is hard to achieve higher density, thereby restricting the properties of the resulting polymers. There thus remains the need to design new metallocene-catalysed polyethylenes, specifically metallocene HDPEs with increased density.

The present inventors have surprising found that the density of single site catalysed (especially metallocene catalysed) HDPEs can be tuned by controlling the bimodality. Specifically, multimodal HDPEs with a particular bimodality can be prepared at higher density, thereby offering a route to polymers with improved properties.

**Summary of Invention**

Viewed from one aspect the invention provides a single-site catalysed multimodal high density polyethylene (HDPE) having a density in the range of 952 to 970 kg/m$^3$ measured according to ISO 1183 and an MFR$_2$ of 0.1 to 4.0 g/10 min according to ISO 1133, and wherein the multimodal HDPE comprises at least two fractions:

(A) 30 to 70 wt%, relative to the total weight of the multimodal HDPE, of a lower molecular weight fraction being an ethylene homopolymer or copolymer with a density in the range of 955 to 970 kg/m$^3$ measured according to ISO 1183 and an MFR$_2$ of 10 to 400 g/10 min measured according to ISO 1133; and
(B) 30 to 70 wt%, relative to the total weight of the multimodal HDPE, of a higher molecular weight fraction being an ethylene homopolymer or copolymer with a density in the range of 940 to 960 kg/m$^3$ measured according to ISO 1183 and an MFR$_2$ of 0.01 to 1.0 g/10 min measured according to ISO 1133.

Viewed from another aspect, the invention provides a process for preparing a multimodal HDPE as hereinbefore defined, said process comprising:

(i) polymerising ethylene, optionally together with one or more comonomer(s), in a first polymerisation stage in the presence of a single site catalyst to prepare a first ethylene polymer;
(ii) polymerising ethylene, optionally together with one or more comonomer(s), in a second polymerisation stage in the presence of said catalyst and said first ethylene polymer to prepare an ethylene polymer mixture comprising said first ethylene polymer and a second ethylene polymer; and
(iii) polymerising ethylene, optionally together with one or more comonomer(s), in a third polymerisation stage in the presence of said catalyst and said ethylene polymer mixture to prepare said multimodal HDPE.

Viewed from a further aspect, the invention provides a composition comprising the multimodal HDPE as hereinbefore defined and a hydrocarbon resin.

Viewed from another aspect, the invention provides an article, preferably an injection moulded article, comprising the multimodal HDPE or the composition as hereinbefore defined.

Viewed from a further aspect, the invention provides use of the multimodal HDPE or the composition as hereinbefore defined for the manufacture of an article, preferably an injection moulded article.

**Detailed Description of Invention**

**Multimodal HDPE**

It has been found that the high density polyethylene polymer according to the invention provides an improved material for moulding applications, displaying very good mechanical properties e.g. in terms of tensile modulus, tensile strength and elongation at break.

The polymer of the invention is a single-site catalysed multimodal high density polyethylene (HDPE). By "single-site catalysed" it is mean that the HDPE is prepared using a single site catalyst, preferably a metallocene catalyst. The person skilled in the art will appreciate that polymer prepared using single site catalysts have characteristic properties imparted to them as result of the use of this class of catalysts. Thus, a "single-site catalysed" HDPE can be differentiated from an HDPE prepared using, for example a Ziegler-Natta catalyst.

The HDPE may be an ethylene homopolymer or an ethylene copolymer. By ethylene homopolymer is meant a polymer comprising at least 97wt % (such as at least 98 wt%, especially at least 99.5 wt%) ethylene monomer units. Thus, the ethylene homopolmer may comprise up to 3 wt% comonomer units. By ethylene copolymer is meant a polymer the majority by weight of which derives from ethylene monomer units (i.e. at least 50 wt% ethylene relative to the total weight of the copolymer). The comonomer contribution preferably is up to 10 % by mol, more preferably up to 5 % by mol. Ideally however there are very low levels of comonomer present in the polymers of the present invention such as 0.1 to 2.0 mol%, e.g. 0.1 to 1.0 mol%.

The other copolymerisable monomer or monomers are preferably C3-12, especially C3-10, alpha olefin comonomers, particularly singly or multiply ethylenically unsaturated comonomers, in particular C3-10-alpha olefins such as propene, but-1-ene, hex-1-ene, oct-1-ene, and 4-methyl-pent-1-ene. The use of 1-hexene, 1-octene and 1-butene, or mixtures thereof, is particularly preferred, especially 1-butene. Ideally there is only one comonomer present.

The polymer of the invention is multimodal and therefore comprises at least two components. The polymer of the invention preferably comprises

(A) a lower molecular weight ethylene copolymer component, and
(B) a higher molecular weight ethylene homopolymer component.

The HDPE of the invention is multimodal. Usually, a polyethylene composition comprising at least two polyethylene fractions, which have been produced under different polymerisation conditions resulting in different (weight average) molecular weights and molecular weight distributions for the fractions, is referred to as "multimodal". Accordingly, in this sense the compositions of the invention are multimodal polyethylenes. The prefix "multi" relates to the number of different polymer fractions the composition is consisting of.

The form of the molecular weight distribution curve, i.e. the appearance of the graph of the polymer weight fraction as a function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The HDPE of the invention has a melt flow rate ($MFR_2$) of 0.1 to 4.0 g/10 min. Typically, the HDPE has an $MFR_2$ of 3.0 g/10 min or less, preferably 2.0 g/10 min or less. The polymer preferably has a minimum $MFR_2$ of 0.4 g/10min, such as at least 0.5 g/10 min, preferably at least 0.6 g/10 min, ideally at least 0.7 g/10min. Thus, particularly suitable values of $MFR_2$ are from 0.5 to 3.0 g/10 min, such as 0.7 to 2.0 g/10 min.

The polymer of the invention preferably has an $MFR_{21}$ of 10 to 70 g/10min, such as 15 to 60 g/10 min, most preferably 20 to 50 g/10 min.

The polymer of the invention preferably has a Flow Rate Ratio (FRR) of the $MFR_{21}/MFR_2$ of at least 15.0, like at least 20.0, more preferably at least 22.0 Furthermore, polymer of the invention preferably has a Flow Rate Ratio (FRR) of the $MFR_{21}/MFR_2$ of up to 40.0, like up to 37.0, more preferably up to 35.0.

The density of the polymer is 952 to 970 $kg/m^3$. The polymers of the invention are therefore high density polyethylenes, HDPE. More preferably, the polymer has a density of 954 $kg/m^3$ or more, such as 955 $kg/m^3$ or more. Furthermore, the density of the polymer preferably is 965 $kg/m^3$ or lower, and more preferably is 960 $kg/m^3$ or lower. A typical density range is 955 to 960 $kg/m^3$.

The HDPE polymer preferably has a molecular weight distribution Mw/Mn, being the ratio of the weight average molecular weight Mw and the number average molecular weight Mn, of 3.0 or more, such as 3.2 or more, more preferably of 3.5 or more. The polymer preferably has an Mw/Mn of 15.0 or below, more preferably of 9.0 or below, like 6.0 or below. Thus, a suitable range for the molecular weight distribution (MWD) is 3.0 to 15.0, preferably 3.2 to 9.0, more preferably 3.5 to 6.0.

The weight average molecular weight Mw of the polymer preferably is at least 75 kDa, more preferably at least 80 kDa, such as at least 85 kDa. Furthermore, the Mw of the composition preferably is at most 250 kDa, more preferably at most 200 kDa, such as at most 150 kDa. Thus, a suitable range for the weight average molecular weight is 75 kDa to 250 kDa, preferably 80 kDa to 200 kDa, more preferably 85 kDa to 150 kDa.

As noted above, the HDPE of the invention comprises at least a lower molecular weight component (A) and a higher molecular weight component (B). In one particularly preferably embodiment, the HDPE consists of components (A) and (B). The weight ratio of fraction (A) to fraction (B) in the composition is in the range 30:70 to 70:30, more preferably 35:65 to 65:35, most preferably 40:60 to 60:40. In some embodiments the ratio may be 35 to 50 wt% of fraction (A) and 50 to 65 wt% fraction (B), such as 40 to 50 wt% of fraction (A) and 50 to 60 wt% fraction (B).

Fraction (A) may be an ethylene homopolymer or an ethylene copolymer, preferably an ethylene copolymer. Fraction (B) may be an ethylene homopolymer or an ethylene copolymer, preferably an ethylene homopolymer. The terms "ethylene homopolymer" and "ethylene copolymer" are as defined above, thus the "ethylene homopolymer" as fraction (A) or (B) may comprise up to 3 wt% comonomer units.

In a preferred embodiment of the invention, Fraction (A) is an ethylene copolymer component and fraction (B) is an ethylene homopolymer component. Typically, fraction (B) consists of a single ethylene homopolymer. Fraction (A) may consist of a single ethylene copolymer. Alternatively, Fraction (A) may be an ethylene copolymer mixture comprising (e.g. consisting of) a first ethylene copolymer and a second ethylene copolymer. Fraction (A) may be unimodal or multimodal. In embodiments wherein Fraction (A) is an ethylene copolymer mixture, it is preferable if the comonomer(s) in the first and second ethylene copolymers are the same.

The HDPE of the invention is typically produced in a multistage process wherein fractions (A) and (B) are produced in subsequent stages. In such a case, the properties of the fractions produced in the second step (or further steps) of the multistage process can either be inferred from polymers which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

Polymer HDPEs produced in a multistage process are also designated as "in-situ" blends. The resulting end product consists of an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture

The lower molecular weight fraction (A) has an $MFR_2$ of 10 to 400 g/10min, preferably 12 to 200 g/10min, most preferably 15 to 100 g/10min.

The density of fraction (A) is 955 to 970 $kg/m^3$, preferably 958 to 968 $kg/m^3$, more preferably 960 to 965 $kg/m^3$.

Preferably, fraction (A) is an ethylene copolymer. Preferred ethylene copolymers employ alpha-olefins (e.g. C3-12 alpha-olefins) as comonomers. Examples of suitable alpha-olefins include but-1-ene, hex-1-ene and oct-1-ene. But-1-ene is an especially preferred comonomer.

The higher molecular weight fraction (B) has an $MFR_2$ of 0.01 to 1.0 g/10min, preferably 0.02 to 0.75 g/10min, most preferably 0.05 to 0.5 g/10min.

The density of fraction (B) is 940 to 960 $kg/m^3$, preferably 945 to 958 $kg/m^3$, more preferably 950 to 955 $kg/m^3$.

Preferably, fraction (B) is an ethylene homopolymer.

**Polymerisation Process**

The multimodal HDPE may be produced by polymerisation using conditions which create a multimodal (e.g. bimodal) polymer product using a single site catalyst system. Typically, a two or more stage, i.e. multistage, polymerisation process is used with different process conditions in the different stages or zones (e.g. different temperatures, pressures, polymerisation media, hydrogen partial pressures, etc). Preferably, the multimodal (e.g. bimodal) composition is produced by a multistage polymerisation, e.g. using a series of reactors, with optional comonomer addition preferably in only the reactor(s) used for production of the higher/highest molecular weight component(s). A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors etc. (see for example WO97/44371 and WO96/18662).

Preferably, the multimodal HDPE is a bimodal HDPE prepared in a two-stage or three-stage polymerisation process, more preferably a three-stage polymerisation process.

In the preferred three-stage polymerisation process, the process typically comprises:

(i) polymerising ethylene, optionally together with one or more comonomer(s), in a first polymerisation stage in the presence of a single site catalyst to prepare a first ethylene polymer;

(ii) polymerising ethylene, optionally together with one or more comonomer(s), in a second polymerisation stage in the presence of said catalyst and said first ethylene polymer to prepare an ethylene polymer mixture comprising said first ethylene polymer and a second ethylene polymer; and

(iii) polymerising ethylene, optionally together with one or more comonomer(s), in a third polymerisation stage in the presence of said catalyst and said ethylene polymer mixture to prepare said multimodal HDPE.

In this process, the ethylene polymer mixture prepared in the second polymerisation stage may be considered equivalent to Fraction (A) and the ethylene polymer prepared in the third polymerisation stage may be considered equivalent to Fraction (B).

Preferable comonomers are discussed hereinbefore, however it is noted that it is particularly preferable if the comonomer is butene.

First and Second Polymerisation Stages

The first polymerisation stage produces a first ethylene polymer, preferably a first ethylene copolymer, which is subsequently fed to the second polymerisation stage. The second polymerisation stage produced a second ethylene polymer, preferably a second ethylene copolymer, thus generating an ethylene polymer mixture, preferably an ethylene copolymer mixture, which is subsequently fed to the third polymerisation stage.

The first and/or the second polymerisation stages are preferably slurry polymerization steps. More preferably, both the first and second polymerisation stages are slurry polymerisation steps.

The slurry polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amount of methane, ethane and/or butane.

The ethylene content in the fluid phase of the slurry may be from 1 to 50 % by mole, preferably from 2 to 20 % by mole and in particular from 2 to 10 % by mole. The benefit of having a high ethylene concentration is that the productivity of the catalyst is increased but the drawback is that more ethylene then needs to be recycled than if the concentration was lower.

The temperature in each of the first and second polymerisation stages is typically from 60 to 100 °C, preferably from 70 to 90 °C. An excessively high temperature should be avoided to prevent partial dissolution of the polymer into the diluent and the fouling of the reactor. The pressure is from 1 to 150 bar, preferably from 40 to 80 bar.

The slurry polymerisation may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first and second polymerization stages as slurry polymerisations in two consecutive loop reactors.

The slurry may be withdrawn from each reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from each of the first and second polymerisation stages continuously.

Hydrogen is typically introduced into the first and second polymerisation stages for controlling the $MFR_2$ of the first and second ethylene polymers. The amount of hydrogen needed to reach the desired MFR depends on the catalyst used and the polymerisation conditions. The desired polymer properties may be obtained in slurry polymerisation in a loop reactor with the molar ratio of hydrogen to ethylene of from 100 to 1000 mol/kmol (or mol/1000 mol) and preferably of from 200 to 800 mol/kmol.

The average residence time in each of the first and second polymerisation stages is typically from 20 to 120 minutes, preferably from 30 to 80 minutes. As it is well known in the art the average residence time $\tau$ can be calculated from Equation 1 below:

$$\text{Equation 1: Residence Time}$$

$$\tau = \frac{V_R}{Q_o}$$

Where $V_R$ is the volume of the reaction space (in case of a loop reactor, the volume of the reactor, in case of the fluidized bed reactor, the volume of the fluidized bed) and $Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the ethylene feed rate.

The first and second ethylene polymers may be unimodal in view of their molecular weight and/or their density or they can be bimodal in respect of their molecular weight and/or their density. However, it is preferred if they are unimodal in view of their molecular weight and density. Thus, the ethylene polymer mixture is preferably a unimodal mixture. For a person skilled in the art it will be clear that — when producing the first and the second ethylene polymers in two consecutive reactors, there can be a small difference in the $MFR_2$-values and density-values of each fraction, whilst still being considered "unimodal".

The split between the first and second polymerisation stages may be in the range 30:70 to 70:30, preferably 40:60 to 60:40, such as 45:55 to 55:45, for example 50:50.

Third Polymerisation Stage

In the third polymerisation stage, ethylene is polymerised, optionally together with at least one comonomer, in the presence of the catalyst and the ethylene polymer mixture. It will thus be appreciated that the third polymerisation stage generates an ethylene polymer (Fraction (B)), which combines with the ethylene homopolymer mixture to form the HDPE of the invention. Preferably, only ethylene is polymerised in the third polymerisation stage, thus generating an ethylene hompolymer.

The third polymerisation stage is preferably a gas phase polymerisation step, i.e. carried out in a gas-phase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

A chain transfer agent (e.g. hydrogen) is typically added to the third polymerisation stage, preferably in amounts of 50 to 500 mol of $H_2$/kmol ethylene.

The split between the third polymerisation stage and the first and second polymerisation stages taken together (i.e. between the gas phase polymerisation and the slurry polymerisations) is at least 50%, preferably 50 to 70%, such as 55 to 65%.

Prepolymerization

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerization step is typically from 0 to 90 °C, preferably from 20 to 80 °C and more preferably from 40 to 75 °C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount of polymer produced in the prepolymerization typically lies within 1 — 5 wt% in respect to the final multimodal HDPE.

Catalyst

The multimodal HDPE is produced using a single site catalyst, which includes metallocene catalyst and non-metallocene catalyst, which all terms have a well-known meaning in the art.

Preferably, the single site catalyst is a metallocene catalyst. In this context, the term "single site catalyst" means the catalytically active metallocene compound or complex combined with a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In one embodiment the organometallic compound (C) has the following formula (I):

$$(L)_m R_n M X_q \qquad (I)$$

wherein

"M" is a transition metal (M) transition metal (M) of Group 3 to 10 of the Periodic Table (IUPAC 2007),
each "X" is independently a monoanionic ligand, such as a σ-ligand,
each "L" is independently an organic ligand which coordinates to the transition metal "M",
"R" is a bridging group linking said organic ligands (L),
"m" is 1, 2 or 3, preferably 2
"n" is 0, 1 or 2, preferably 1,
"q" is 1, 2 or 3, preferably 2 and
m+q is equal to the valency of the transition metal (M).
"M" is preferably selected from the group consisting of zirconium (Zr), hafnium (Hf), or titanium (Ti), more preferably selected from the group consisting of zirconium (Zr) and hafnium (Hf). "X" is preferably a halogen, most preferably Cl.

Most preferably the organometallic compound (C) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP—A-1739103

Most preferred single site catalyst is a metallocene catalyst which means the catalytically active metallocene complex, as defined above, together with a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylalumoxane (MAO), tetraisobutylalumoxane (TIBAO) or hexaisobutylalumoxane (HIBAO).

Preferably, fractions (A) and (B) of the multimodal HDPE are produced using, i.e. in the presence of, the same metallocene catalyst.

In the production of the multimodal HDPE of the present invention, preferably a compounding step is applied, wherein the composition of the base resin, i.e. the blend, which is typically obtained as a base resin powder from the reactor, is extruded in an extruder and then pelletised to polymer pellets in a manner known in the art.

The multimodal HDPE may also contain minor quantities of additives such as pigments, nucleating agents, antistatic agents, fillers, antioxidants, etc., generally in amounts of up to 10 % by weight, preferably up to 5 % by weight.

Optionally, additives or other polymer components can be added to the multimodal HDPE during the compounding step in the amount as described above. Preferably, the multimodal HDPE of the invention obtained from the reactor is compounded in the extruder together with additives in a manner known in the art.

**Composition**

The invention further relates to a composition comprising the multimodal HDPE as defined above and a hydrocarbon resin.

The polymer composition typically comprises 90 to 99 wt% of the multimodal HDPE and 1 to 10 wt% of the hydrocarbon resin, wherein the wt% values are relative to the total weight of the polymer composition.

In a preferred embodiment, the HDPE is present in an amount of 92 to 98.5 wt%, more preferably 93 to 98 wt%, such as 95 to 97.5 wt%, relative to the total weight of the polymer composition.

It is preferred if the hydrocarbon resin is present in an amount of 1.5 to 8 wt%, more preferably 2 to 7 wt%, such as 2.5 to 5 wt%, relative to the total weight of the polymer composition.

Whilst it is within the ambit of the invention for polymers other than the multimodal HDPE and the hydrocarbon resin to be present in the polymer composition, it is preferable if the multimodal HDPE and the hydrocarbon resin are the only polymer components present.

The polymer composition preferably consists of the multimodal HDPE and the hydrocarbon resin. For the avoidance of doubt, it is envisaged that usual polymer additives, e.g. pigments, nucleating agents, antistatic agents, fillers and antioxidants, may be present even when the polymer composition "consists" of the multimodal HDPE and the hydrocarbon resin. The term "consists of' is not intended therefore to exclude the presence of polymer additives. It does however exclude the presence of other polymer components for blending with the HDPE and the hydrocarbon resin. If a carrier polymer is used as part of a masterbatch, that is not excluded however. The composition may be free of any other mixing polymers but may still comprise minor amounts of carrier polymer used for masterbatches.

The polymer composition is typically prepared by blending and homogeneously mixing the components (e.g. the multimodal HDPE and hydrocarbon resin), for example by melt mixing in an extruder.

**Hydrocarbon Resin**

The Hydrocarbon Resin employed in the present invention can be any low molecular weight polymer derived by polymerizing an olefin feedstock, where the weight average molecular weight (MW) of the material is less than about 20,000 Dalton. Suitable resins have a Mw of less than about 10,000, with hydrocarbon resins of Mw less than 5,000 being preferred, for example resins of at least about 500 to about 2,000 Mw. Mw of the resins are determined using size exclusion chromatography (SEC) using polystyrene as a standard.

The resins can be derived from crude olefin feeds produced in the petroleum cracking process. Examples of these crude olefin feeds include a light olefin fraction having an average carbon number of 5 carbon atom per olefin molecule (C5 feeds) or cyclic olefins having an average of 9 carbon atom per olefin molecule (C9 feeds). Resins produced from olefin streams rich in DCPD derived from ethylene cracking can also be used effectively in this invention. Useful resins can also be produced from terpene olefins, such as limonene derived from citrus products. Lastly the resins derived from polymerization of pure monomer streams consisting of styrene, [alpha]-methylstyrene, 4-methylstyrene and vinyltoluene can be utilized in this invention.

In order to be compatible with the multimodal HDPE, the hydrocarbon resin is ideally aliphatic in character, and for this reason hydrogenated resins with little residual aromatic character are preferable. Fully hydrogenated resin products are preferred because of their light colour and thermal stability.

Thus, in one preferred embodiment of the invention, the hydrocarbon resin is an aliphatic resin.

The hydrocarbon resin may be linear or cyclic, preferably cyclic.

A particularly preferred class of hydrocarbon resins are cyclic aliphatic hydrocarbon resins.

One example of a resin useful in this invention is the resin derived from the polymerization of a crude C9 feed stream, followed by catalytic hydrogenation. C9 feedstock is defined as the olefin stream produced during petroleum cracking comprised of hydrocarbon olefin components having about 9 carbon atoms per molecule. Examples of olefins found in a C9 feed include but are not limited to styrene, [alpha]-methylstyrene, indene, various methyl substituted indenes, 4-methylstyrene, [beta]-methylstyrene, ethylstyrene, among other olefins. The resultant resin product is aromatic in character, but can be converted to an aliphatic type resin by catalytic hydrogenation.

By "hydrogenation" is meant that residual olefin groups in the resin and the aromatic units in the resin, are converted to saturated species by reduction with hydrogen. Hydrogenation reactions be carried under various conditions, examples being at temperatures in the range of about 150 °C to about 320 °C, using hydrogen pressures between about 50 to about 2000 psi. More typically, the hydrogenation would be carried out at temperatures between about 200 °C to about 300 °C to produce the desired product. A typical catalyst for hydrogenating these resins would be Ni metal supported on a carrier such as carbon black. In this class, the preferred type of product would be a resin having more than about 90% of the aromatic units hydrogenated, preferably greater than about 95% of the aromatic units hydrogenated.

Examples of this type of resin are Regalite(R) R-125 resin available from Hercules Incorporated, Middelburg, The Netherlands or Arkon(R) P-125 resin available from Arakawa Chemical Co.

Another example of a resin effective in this application are resins derived from polymerization of pure monomers such as styrene, [alpha]-methylstyrene, 4-methylstyrene, vinyltoluene, or any combination of these or similar pure monomer feedstocks. The product produced by this polymerization is aromatic in character, but can be converted to an aliphatic type resin by catalytic hydrogenation. The process used to hydrogenate these resins is similar to the process, described above, suitable for hydrogenating resins derived from C9 olefin feedstocks. These resins, derived from hydrogenating oligomers of pure monomers, can be hydrogenated to various degrees, where between about 20% to about 100% of the aromatic groups in the resin are reduced to saturated units. Preferably greater than about 90% of the hydrogenated units should be hydrogenated, and more preferred is a degree of hydrogenation greater than about 95%.

Examples of these resins are Regalrez(R) 1139 resin or Regalrez(R) 1126 resin available from Hercules Incorporated.

Resins useful in this invention can also be derived from the polymerization of terpene olefins, examples being the cationic polymerization of monomers such as [alpha]-pinene, [beta]-pinene, or d-limonene. These resins are aliphatic-type materials and hydrogenation is not required to achieve aliphatic character. However, hydrogenation to saturate residual olefin groups in the resin can be carried out to produce resins with greater thermal stability which can be likewise used as part of this invention. Examples of resins of this type include Piccolyte(R) A-135 and Piccolyte(R) C-125 resins available from Hercules Incorporated.

The most preferred resin for this invention are resins derived by thermally polymerizing olefin feeds rich in dicyclopentadiene (DCPD). Resins of this type can be produced by thermally reacting olefin streams containing between about 50% to about 100% DCPD at temperatures in the range of about 200 °C to about 325 °C to produce resin products which can be hydrogenated to form fully saturated materials with weight average molecular weight (Mw) values below about 5000 Daltons. Hydrogenation of these resins is not required, but is greatly preferred to achieve a low color DCPD resin product with good thermal stability. As an example, a DCPD feed containing nominally 85% DCPD, can be converted into a resin product by heating the DCPD to temperatures in the range about 260 °C to about 300 °C, for a suitable time, typically in the range of about 10 to about 200 minutes, depending on temperature, to produce a resin which after hydrogenation and stripping to remove volatile components exhibits a Ring and Ball (R&B) softening point in the range of about 100 °C to about 170 °C, as determined by ASTM D28-67, aliphatic character, and Mw less than about 5000.

An example of this type of resin is Plastolyn R1140 resin available from Eastman Chemical Company.

The hydrocarbon resins of the invention preferably have a Ring and Ball (R&B) softening point in the range of about 100 °C to about 170 °C, more preferably 110 to 160 °C, as determined by ASTM D28-67.

**Articles**

Still further, the present invention relates to an article comprising the multimodal HDPE as described above or the composition as described above. The invention also relates to the use of such a multimodal HDPE or composition in the manufacture of an article.

In one embodiment, the article comprises at least 90.0 wt%, relative to the total weight of the article, of the multimodal HDPE, more preferably at least 95.0 wt%, still more preferably at least 98.0 wt%, like at least 99.9 wt%. It is especially preferred that the article consists of the multimodal HDPE.

In another embodiment, the article comprises at least 90.0 wt%, relative to the total weight of the article, of the composition of the invention, more preferably at least 95.0 wt%, still more preferably at least 98.0 wt%, like at least 99.9 wt%. It is especially preferred that the article consists of the composition.

Articles according to the present invention are preferably injection moulded articles, more preferably a cap or closure. Such articles may be prepared by conventional methods as known in the art.

It is preferred that the article has a tensile modulus determined according to ISO 527-2 on ISO 527-2 on 1A ISO 527-2 dog bones of at least 500 MPa, more preferably in the range of 600 to 1500 MPa, still more preferably in the range of 700 to 1400 MPa.

It is preferred that the article has a tensile strength determined according to ISO 527-2 on ISO 527-2 on 1A ISO 527-2 dog bones of at least 18 MPa, more preferably in the range of 20 to 30 MPa, still more preferably in the range of 22 to 25 MPa.

It is preferred that the article has an elongation at break determined according to ISO 527-2 on 1A ISO 527-2 dog bones of at least 300%, more preferably in the range of 350% to 1200%, still more preferably in the range of 400 to 1000%.

It will be appreciated that any parameter mentioned above is measured according to the detailed test given below. In any parameter where a narrower and broader embodiment are disclosed, those embodiments are disclosed in connection with the narrower and broader embodiments of other parameters.

The invention will now be described with reference to the following non limiting examples.

**Test Methods:**

**Melt Flow Rate (MFR)**

The melt flow rates are measured at 190 °C with a load of 2.16 kg ($MFR_2$) or 21.6 kg ($MFR_{21}$) according to ISO 1133

*Calculation of MFR$_2$ of Fraction (A) and (B)*

$$logA = x \cdot logB + (1 - x) \cdot logC$$

$$C = 10^{\wedge \frac{(logA - x.logB)}{(1-x)}}$$

B = $MFR_2$ of Fraction (A)
C = $MFR_2$ of Fraction (B)
A = final $MFR_2$ (mixture) of multimodal HDPE
X = weight fraction of Fraction (A)

**Flow Rate Ratio (FRR21/2))**

FRR is determined as the ratio between the $MFR_{21}$ and the $MFR_2$.

**GPC**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x M_i)}{\sum_{i=1}^{N} A_i} \quad (2)$$

$$M_z = \frac{\sum_{i=1}^{N}(A_i \, x \, M_i^2)}{\sum_{i=1}^{N}(A_i x M_i)} \ (3)$$

For a constant elution volume interval $\Delta V_i$, where $A_i$, and Mi are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain), equipped with 3 × Agilent-PLgel Olexis and 1× Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 $\mu$L of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \ \alpha_{PS} = 0.655$$

$$K_{PE} = 39 \times 10^{-3} \text{ mL/g}, \ \alpha_{PE} = 0.725$$

$$K_{PP} = 19 \times 10^{-3} \text{ mL/g}, \ \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

Comonomer contents

Quantification of microstructure by NMR spectroscopy

Quantitative nuclear-magnetic resonance (NMR) spectroscopy was used to quantify the comonomer content of the polymers.

Quantitative $^{13}$C{$^{1}$H} NMR spectra recorded in the molten-state using a Bruker Advance III 500 NMR spectrometer operating at 500.13 and 125.76 MHz for $^{1}$H and $^{13}$C respectively. All spectra were recorded using a $^{13}$C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. {klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}$C{$^{1}$H} NMR spectra were processed, integrated and relevant quantitative properties determined from the integrals. All chemical shifts are internally referenced to the bulk methylene signal ($\delta$+) at 30.00 ppm.

The amount of ethylene was quantified using the integral of the methylene ($\delta$+) sites at 30.00 ppm accounting for the number of reporting sites per monomer:

$$E = I_{\delta+} / 2$$

the presence of isolated comonomer units is corrected for based on the number of isolated comonomer units present:

$$E_{total} = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal))$$

The amount isolated 1-butene incorporated in EEBEE sequences was quantified using the integral of the $_*B2$ sites at 38.3 ppm accounting for the number of reporting sites per comonomer:

$$B = I_{*B2}$$

The amount consecutively incorporated 1-butene in EEBBEE sequences was quantified using the integral of the $\alpha\alpha B2B2$ site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the $\beta\beta B2B2$ site at 24.7 ppm accounting for the number of reporting sites per comonomer:

$$BEB = 2 * I\beta\beta B2B2$$

Due to the overlap of the $*B2$ and $*\beta B2B2$ sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I\beta\beta B2B2$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal))$$

The amount isolated 1-hexene incorporated in EEHEE sequences was quantified using the integral of the $_*B4$ sites at 39.9 ppm accounting for the number of reporting sites per comonomer:

$$H = I_{*B4}$$

The amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the $\beta\beta B4B4$ site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B\ [mol\%] = 100 * fB$$

$$H\ [mol\%] = 100 * fH$$

The weight percent comonomer incorporation is calculated from the mole fraction:

$$B\ [wt\%] = 100 * (\ fB * 56.11) / (\ (fB * 56.11) + (fH * 84.16) + ((1-(fB + fH)) * 28.05)$$
$$)$$

$$H\ [wt\%] = 100 * (\ fH * 84.16\ ) / (\ (fB * 56.11) + (fH * 84.16) + ((1-(fB + fH)) *$$
$$28.05)\ )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128.
Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239
Griffin, J.M., Tripon, C., Samoson, A., Filip, C., and Brown, S.P., Mag. Res. in Chem. 2007 45, S1, S198
Castignolles, P., Graf, R., Parkinson, M., Wilhelm, M., Gaborieau, M., Polymer 50 (2009) 2373
Busico, V., Cipullo, R., Prog. Polym. Sci. 26 (2001) 443
Busico, V., Cipullo, R., Monaco, G., Vacatello, M., Segre, A.L., Macromoleucles 30 (1997) 6251
Zhou, Z., Kuemmerle, R., Qiu, X., Redwine, D., Cong, R., Taha, A., Baugh, D. Winniford, B., J. Mag. Reson. 187 (2007) 225
Busico, V., Carbonniere, P., Cipullo, R., Pellecchia, R., Severn, J., Talarico, G., Macromol. Rapid Commun. 2007, 28, 1128
Resconi, L., Cavallo, L., Fait, A., Piemontesi, F., Chem. Rev. 2000, 100, 1253

**Density**

The density was measured according to ISO 1183 and ISO 1872-2 for sample preparation.
For the purpose of this invention the density of the blend can be calculated from the densities of the components and vice versa according to:

$$\rho_b = \sum_i w_i \cdot \rho_i$$

where $\rho_b$ is the density of the blend,
$w_i$ is the weight fraction of component "i" in the blend and
$\rho_i$ is the density of the component "i".

**Tensile tests**

The tensile properties (tensile modulus, tensile strength, elongation at break) were determined according to ISO 527-2 on 1A ISO 527-2 dog bones. Following the standard, a test speed of 1mm/min was used for tensile modulus and 50mm/min for all other properties. The testing temperature was $23 \pm 2\,°C$. Injection moulding was carried out according to ISO 17855-2 (for PE).

**Experimental**

**Catalyst preparation**

Loading of SiO2: 10 kg of silica (PQ Corporation ES757, calcined 600°C) was added from a feeding drum and inertized in the reactor until O2 level below 2 ppm was reached.

Preparation of MAO/tol/MC: 30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Racdimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

Preparation of catalyst: Reactor temperature was set to 10°C (oil circulation temp) and stirring 40 rpm for MAO/tol/MC addition. MAO/tol/MC solution (target 22.5 kg, actual 22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour. After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Preparation of polymers**

Multimodal HDPEs according to the invention (IE1-IE3) were produced using the above described catalyst. Two comparative examples were also prepared using the same catalyst. CE1 is unimodal and CE2 is bimodal. Polymerisation conditions and properties of the various fractions and final HDPE are presented in Table 1.

**Table 1**: Production Data

|  | IE1 | IE2 | IE3 | CE1 | CE2 |
|---|---|---|---|---|---|
| **Prepoly reactor** |  |  |  |  |  |
| Temp. (°C) | 50 | 50 | 50 | 50 | 50 |
| Catalyst feed (g/h) | 45.1 | 41.0 | 50.1 | 34.8 | 26.1 |
| Temp. (°C) | 50 | 50 | 50 | 50 | 50 |
| Press. (kPa) | 5851 | 5852 | 5848 | 5525 | 5718 |
| C2 (kg/h) | 4.0 | 4.0 | 4.0 | 4.0 | 3.9 |
| H2 (g/h) | 0.04 | 0.03 | 0.02 | 0.03 | 0.04 |
| C4 (g/h) | 75.0 | 75.0 | 75.1 | 75.0 | 75.0 |

(continued)

| | IE1 | IE2 | IE3 | CE1 | CE2 |
|---|---|---|---|---|---|
| Split (%) | 3.7 | 3.6 | 3.7 | 7.3 | 8.7 |
| **First loop reactor** | | | | | |
| Temp. (°C) | 85 | 85 | 85 | not used | 85 |
| Press. (kPa) | 5445 | 5444 | 5445 | | 5485 |
| C2 conc. (mol-%) | 4.3 | 4.0 | 4.6 | | 5.9 |
| C4 (g/h) | 0.0 | 0.0 | 0.0 | | 0.0 |
| H2/C2 ratio (mol/kmol) | 0.59 | 0.51 | 0.60 | | 0.56 |
| C4/C2 ratio (mol/kmol) | 3.8 | 3.8 | 3.6 | | 5.0 |
| Split % | 19.5 | 19.6 | 19.5 | | 39.6 |
| Density (kg/m3) | 958.8 | 958.2 | 960.8 | | 956.0 |
| MFR2 (g/10 min) | 14.9 | 19.5 | 43.6 | | 9.0 |
| **Split after loop 1, incl prepolymerisation** | 23.2 | 23.2 | 23.3 | 7.3 | 48.3 |
| **Second loop reactor** | | | | | |
| Temp. (°C) | 85 | 85 | 85 | 85 | 85 |
| Press. (kPa) | 5390 | 5388 | 5391 | 5361 | 5177 |
| C4 (g/h) | 0.0 | 0.0 | 0.0 | | 0.0 |
| C2 conc. (mol-%) | 4.0 | 3.9 | 4.1 | 4.9 | 6.5 |
| H2/C2 ratio (mol/kmol) | 0.34 | 0.37 | 0.3 | 0.1 | 0.25 |
| C4/C2 ratio (mol/kmol) | 1.20 | 1.26 | 1 | 5 | 2.0 |
| Split (%) | 22.0 | 21.7 | 22.5 | | 51.7 |
| Density (kg/m3) | 963.1 | 962.2 | 963.7 | 948.0 | 959.9 |
| MFR2 (g/10 min) | 24.0 | 15.0 | 30.0 | 0.7 | 7.0 |
| **Gas Phase Reactor** | 45 | 45 | 46 | | |
| Temp. (°C) | 85 | 85 | 85 | | |
| H2/C2 ratio (mol/kmol) | 0.34 | 0.43 | 0.47 | | |
| C6/C2 ratio (mol/kmol) | 0.01 | 0.02 | 0.02 | | |
| Split % | 54.8 | 55.1 | 54.2 | | |
| Cat total productivity (kg PE/g cat) | 1.73 | 1.87 | 1.52 | 1.20 | 1.50 |
| | | | | | |
| MFR2 after loop 1 (g/10 min) | 14.9 | 19.5 | 43.6 | | 9 |
| Density after loop 1 (kg/m3) | 958.8 | 958.2 | 960.8 | | 956 |
| Split after loop 1 (wt%) | 23.2 | 23.2 | 23.3 | | 48.3 |
| MFR2 after loop 2 (g/10 min) | 24 | 15 | 30 | | 7 |
| Density after loop 2 (kg/m3) | 963.1 | 962.2 | 963.7 | | 959.9 |
| Split after loop 2 (wt%) | 45.2 | 44.9 | 45.8 | | 100 |
| Split loop 1 in loop | 0.51 | 0.52 | 0.51 | | 0.48 |
| MFR2 in loop 2 (g/10 min) | 39.4 | 11.3 | 20.3 | | 5.6 |
| Density in loop 2 (kg/m3) | 967.6 | 966.5 | 966.7 | | 963.5 |

(continued)

|  | IE1 | IE2 | IE3 | CE1 | CE2 |
|---|---|---|---|---|---|
| MFR2 in GPR (g/10 min) | 0.06 | 0.09 | 0.16 |  |  |
| Density in GPR (kg/m3) | 953.1 | 954.9 | 955.0 |  |  |
|  |  |  |  |  |  |
| **Pellet** |  |  |  |  |  |
| MFR2 (g/10 min) | 0.86 | 0.91 | 1.77 | 0.69 | 6 |
| MFR5 (g/10 min) | 2.62 | 2.65 | 4.99 | **n.a.** | **n.a.** |
| MFR21 (g/10 min) | 27.70 | 26.70 | 47.30 | 17.58 | 190 |
| MFR21/MFR2 | 32.2 | 29.3 | 26.7 | 25.5 | 31.7 |
| Density (kg/m3) | 957.6 | 958.2 | 959.0 | 950 | 960.4 |
| MW | 108500 | 106000 | 92300 | 10400 | 73000 |
| MWD | 4.4 | 4.3 | 3.9 | 2.8 | 2.7 |

**Formation of pellets**

The desired amount of PE powder and additive were premixed in an intensive mixer and then compounded on a ZSK 57 twin screw extruder. The melt temperature was 210°C, production rate was 200kg/h. The following additives were added: 0.05wt% Irganox 1010 (BASF), 0.2 wt% Irgafos 168 (BASF) & 0.05 wt% CEASIT FI, where wt% are relative to total weight of composition (the sum of PE powder + additive = 100%).

The properties of the HDPE were measured on injection moulded specimens and results are shown in Table 2. As can be see, all inventive examples show excellent properties like high modulus, higher strength and higher elongation at break.

The properties of the HDPE can be further improved via the addition of a hydrocarbon resin, demonstrated in IE4, which is the HDPE of IE3 blended with 5wt% of Plastolyn™ R1140 (Eastman). The blending was done on a ZSK 18 twin screw extruder, with melt temperature of 210°C, output rate 7kg. IE4 demonstrates that with such modification the stiffness, strength and elongation can be further improved.

**Table 2: Properties of HDPE**

|  | CE1 | CE2 | IE1 | IE2 | IE3 | IE4 |
|---|---|---|---|---|---|---|
| Tensile Modulus (MPa) | 734 | 916 | 895 | 903 | 915 | 952 |
| Tensile Strength (MPa) | 21.99 | 23.3 | 23.24 | 23.4 | 23.22 | 23.19 |
| Elongation at Break (%) | 205 | 265 | 466 | 497 | 816 | 924 |

**Claims**

1.  A single-site catalysed multimodal high density polyethylene (HDPE) having a density in the range of 952 to 970 kg/m$^3$ measured according to ISO 1183 and an MFR$_2$ of 0.1 to 4.0 g/10 min according to ISO 1133, and wherein the multimodal HDPE comprises at least two fractions:

    (A) 30 to 70 wt%, relative to the total weight of the multimodal HDPE, of a lower molecular weight fraction being an ethylene homopolymer or copolymer with a density in the range of 955 to 970 kg/m$^3$ measured according to ISO 1183 and an MFR$_2$ of 10 to 400 g/10 min measured according to ISO 1133; and
    (B) 30 to 70 wt%, relative to the total weight of the multimodal HDPE, of a higher molecular weight fraction being an ethylene homopolymer or copolymer with a density in the range of 940 to 960 kg/m$^3$ measured according to ISO 1183 and an MFR$_2$ of 0.01 to 1.0 g/10 min measured according to ISO 1133.

2.  The multimodal HPDE as claimed in claim 1, wherein the lower molecular weight fraction (A) is an ethylene copolymer, preferably an ethylene copolymer of ethylene and at least one alpha-olefin comonomer, more preferably a C3 to C12 alpha-olefin, even more preferably selected from the group consisting of 1-butene, 1-hexene and 1-octene.

3.  The multimodal HDPE as claimed in claim 2, wherein said low molecular weight ethylene copolymer fraction (A) is an ethylene copolymer mixture comprising a first ethylene copolymer and a second ethylene copolymer.

4.  The multimodal HDPE as claimed in claim 3, wherein the first and second ethylene copolymers are copolymers of ethylene and at least one alpha-olefin comonomer, preferably a C3 to C12 alpha-olefin, more preferably selected from the group consisting of 1-butene, 1-hexene and 1-octene.

5.  The multimodal HDPE as claimed in claim 4, wherein the comonomer(s) in the first and second ethylene copolymers is the same.

6.  The multimodal HDPE as claimed in any of claims 1 to 4, wherein the wherein the higher molecular weight fraction (B) is an ethylene homopolymer.

7.  The multimodal HDPE as claimed in any of claims 1 to 6, wherein the multimodal HDPE has a density of 954 to 965 kg/m$^3$, preferably 955 to 960 kg/m$^3$.

8.  The multimodal HPDE as claimed in any of claims 1 to 7, wherein the HDPE has a MFR$_2$ of 0.5 to 3.0 g/10 min, preferably 0.7 to 2.0 g/10 min.

9.  The multimodal HDPE as claimed in any of claims 1 to 8, wherein said single site catalyst is a metallocene.

10. A process for preparing a multimodal HDPE as claimed in any of claims 1 to 9, said process comprising:

    (i) polymerising ethylene, optionally together with one or more comonomer(s), in a first polymerisation stage in the presence of a single site catalyst to prepare a first ethylene polymer;
    (ii) polymerising ethylene, optionally together with one or more comonomer(s), in a second polymerisation stage in the presence of said catalyst and said first ethylene polymer to prepare an ethylene polymer mixture comprising said first ethylene polymer and a second ethylene polymer; and
    (iii) polymerising ethylene, optionally together with one or more comonomer(s), in a third polymerisation stage in the presence of said catalyst and said ethylene polymer mixture to prepare said multimodal HDPE.

11. A composition comprising the HDPE as claimed in any of claims 1 to 9 and a hydrocarbon resin.

12. The composition as claimed in claim 11, wherein the hydrocarbon resin is present in an amount of 1 to 10 wt%, relative to the total weight of the composition.

13. The composition as claimed in claim 11 or 12, wherein said hydrocarbon resin is a cyclic aliphatic hydrocarbon resin.

14. An article, preferably an injection moulded article, comprising the HDPE as claimed in any of claims 1 to 9 or the composition as claimed in any of claims 11 to 13.

15. Use of a multimodal HDPE as defined in any of claims 1 to 9, or a composition as claimed in any of claims 11 to 13, for the manufacture of an article, preferably an injection moulded article.

Europäisches
Patentamt

European
Patent Office

Office européen
des brevets

# EUROPEAN SEARCH REPORT

Application Number

EP 21 20 1526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/009386 A1 (TOTAL RES & TECHNOLOGY FELUY [BE]) 19 January 2017 (2017-01-19) | 1-6, 8-10,14, 15 | INV.<br>C08F210/16<br>C08L23/08 |
| Y | * page 23, lines 1-5; claim 1; example 1; table 1 * | 11-13 | |
| X | WO 2015/101668 A1 (INEOS EUROPE AG [CH]) 9 July 2015 (2015-07-09) | 1,2,4,5, 7-9,14, 15 | |
| Y | * claims 1, 11; examples 1-4; tables 1-2 * | 11-13 | |
| X | EP 2 878 623 B1 (ABU DHABI POLYMERS CO LTD BOROUGE [AE]; BOREALIS AG [AT]) 11 July 2018 (2018-07-11) | 1,4,7-9, 14,15 | |
| Y | * paragraphs [0058], [0059], [0061], [0063], [0064], [0078] – [0083]; claims 1, 4, 6, 11, 13, 15 * | 11-13 | |
| X | Dow: "Technical Information CONTINUUM(TM)DMDC-1250 NT 7 High Density Polyethylene Resin", , 16 April 2013 (2013-04-16), pages 1-2, XP055895426, Retrieved from the Internet: URL:https://www.dow.com/content/dam/dcc/do cuments/en-us/productdatasheet/400/400-002 22672en-continuum-dmdc1250-nt-7-tds.pdf [retrieved on 2022-02-25] | 1,7,8, 14,15 | TECHNICAL FIELDS SEARCHED (IPC)<br><br>C08F<br>C08L |
| Y | * the whole document * | 11-13 | |
| Y | WO 98/55537 A1 (HERCULES INC [US]) 10 December 1998 (1998-12-10) * claims 1, 30; example all; compounds Regalrez 1139, Plastolyn 140 * | 11-13 | |

The present search report has been drawn up for all claims

| Place of search | Date of completion of the search | Examiner |
|---|---|---|
| Munich | 23 March 2022 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

## EP 4 163 309 A1

### ANNEX TO THE EUROPEAN SEARCH REPORT
### ON EUROPEAN PATENT APPLICATION NO.

EP 21 20 1526

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2022

| Patent document cited in search report | | | Publication date | Patent family member(s) | | | Publication date |
|---|---|---|---|---|---|---|---|
| WO 2017009386 | A1 | | 19-01-2017 | AU | 2016293039 | A1 | 18-01-2018 |
| | | | | BR | 112018000715 | A2 | 18-09-2018 |
| | | | | CA | 2990906 | A1 | 19-01-2017 |
| | | | | CN | 107835822 | A | 23-03-2018 |
| | | | | EA | 201800018 | A1 | 30-04-2018 |
| | | | | EP | 3180368 | A1 | 21-06-2017 |
| | | | | JP | 6946260 | B2 | 06-10-2021 |
| | | | | JP | 2018520241 | A | 26-07-2018 |
| | | | | KR | 20180030525 | A | 23-03-2018 |
| | | | | PH | 12018500073 | A1 | 30-07-2018 |
| | | | | TR | 201819970 | T4 | 21-01-2019 |
| | | | | US | 10544245 | B1 | 28-01-2020 |
| | | | | WO | 2017009386 | A1 | 19-01-2017 |
| WO 2015101668 | A1 | | 09-07-2015 | BR | 112016015796 | A2 | 08-08-2017 |
| | | | | CA | 2936812 | A1 | 09-07-2015 |
| | | | | CN | 106061854 | A | 26-10-2016 |
| | | | | EP | 3092180 | A1 | 16-11-2016 |
| | | | | KR | 20160106660 | A | 12-09-2016 |
| | | | | RU | 2016132399 | A | 13-02-2018 |
| | | | | US | 2016333172 | A1 | 17-11-2016 |
| | | | | WO | 2015101668 | A1 | 09-07-2015 |
| EP 2878623 | B1 | | 11-07-2018 | AU | 2014356524 | A1 | 05-05-2016 |
| | | | | CN | 106062065 | A | 26-10-2016 |
| | | | | EA | 201691016 | A1 | 30-12-2016 |
| | | | | EP | 2878623 | A1 | 03-06-2015 |
| | | | | EP | 3074463 | A1 | 05-10-2016 |
| | | | | JP | 6761923 | B2 | 30-09-2020 |
| | | | | JP | 2016538397 | A | 08-12-2016 |
| | | | | JP | 2020073659 | A | 14-05-2020 |
| | | | | MA | 39143 | A1 | 31-01-2017 |
| | | | | PH | 12016500996 | A1 | 18-07-2016 |
| | | | | WO | 2015078924 | A1 | 04-06-2015 |
| WO 9855537 | A1 | | 10-12-1998 | AU | 8176698 | A | 21-12-1998 |
| | | | | BR | 9804956 | A | 24-08-1999 |
| | | | | CA | 2261961 | A1 | 10-12-1998 |
| | | | | CN | 1228101 | A | 08-09-1999 |
| | | | | DE | 69832866 | T2 | 22-06-2006 |
| | | | | DE | 69837573 | T2 | 06-09-2007 |
| | | | | EP | 0925324 | A1 | 30-06-1999 |
| | | | | EP | 1609811 | A2 | 28-12-2005 |
| | | | | JP | 2000516298 | A | 05-12-2000 |
| | | | | JP | 2009102651 | A | 14-05-2009 |
| | | | | KR | 20000068063 | A | 25-11-2000 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 21 20 1526

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2022

| Patent document cited in search report | Publication date | Patent family member(s) | | Publication date |
|---|---|---|---|---|
| | | TW | 531548 B | 11-05-2003 |
| | | US | 2002103300 A1 | 01-08-2002 |
| | | US | 2003055175 A1 | 20-03-2003 |
| | | WO | 9855537 A1 | 10-12-1998 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9744371 A
- WO 9618662 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- WO 9619503 A
- WO 9632420 A
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A

**Non-patent literature cited in the description**

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO ; V., CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253